(19) Europäisches Patentamt
European Patent Office
Office européen des brevets

(11) **EP 4 365 463 A1**

(12) **EUROPEAN PATENT APPLICATION**
published in accordance with Art. 153(4) EPC

(43) Date of publication:
**08.05.2024 Bulletin 2024/19**

(21) Application number: **22833210.2**

(22) Date of filing: **29.06.2022**

(51) International Patent Classification (IPC):
**F16H 7/02** (2006.01)

(52) Cooperative Patent Classification (CPC):
**F16H 7/02**

(86) International application number:
**PCT/JP2022/025971**

(87) International publication number:
**WO 2023/277064 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021  JP 2021109639
17.06.2022  JP 2022097983**

(71) Applicant: **Mitsuboshi Belting Ltd.
Kobe-shi, Hyogo 653-0024 (JP)**

(72) Inventors:
• **NISHIDA Shuhei
Kobe-shi, Hyogo 653-0024 (JP)**
• **OSAKI Susumu
Kobe-shi, Hyogo 653-0024 (JP)**
• **MIZUMOTO Takumi
Kobe-shi, Hyogo 653-0024 (JP)**
• **MARUYAMA Yuji
Kobe-shi, Hyogo 653-0024 (JP)**

(74) Representative: **Hoffmann Eitle
Patent- und Rechtsanwälte PartmbB
Arabellastraße 30
81925 München (DE)**

(54) **CALCULATION CONTROL METHOD FOR PREDICTED VALUE OF JUMPING TORQUE OF TOOTHED BELT**

(57)    This method comprises: comparing a calculated value of a jumping torque (Tq) obtained by substituting various parameter values of the product (ES) of a longitudinal modulus (E) and the cross-sectional area (S) of a toothed belt (1), a tooth height (h), a pulley pitch diameter (Rr), a pulley pitch diameter (Rn), an initial tension ($T_0$), a tight-side span length (Lt), a slack-side span length (Ls), a wrap angle (θr), and a wrap angle (θn), into an expression (1)- an expression (3) and an actually measured value of the jumping torque (Tq) to each other; storing, in a storage unit (12), the value of an overall correction coefficient (K) and the value of a mesh correction coefficient (Kmn) of a driven pulley, each of which is determined in advance as a value that minimizes the average value of the difference between the compared values; and substituting the stored various parameter values, the value of the overall correction coefficient (K), and the value of the mesh correction coefficient (Kmn) into the expression (1)- the expression (3) to calculate the jumping torque (Tq) of the toothed belt (1) wound around a driving pulley (DR) and the driven pulley (DN).

*FIG. 1*

**Description**

TECHNICAL FIELD

The present invention relates to a calculation control method for a predicted value of a jumping torque of a toothed belt.

BACKGROUND ART

Generally, as a power-transmission system, a power-transmission belt is widely used in addition to a gear and a chain. The power-transmission belt is roughly classified into a frictional power-transmission belt that transmits power by a frictional force with a pulley and a synchronous power-transmission belt that transmits power by mechanical engagement with a pulley. Examples of the synchronous power-transmission belt include a toothed belt including tooth portions engaging with pulley groove portions only on an inner peripheral surface of the belt, and a double-sided toothed belt including tooth portions on both an inner peripheral surface and an outer peripheral surface of the belt.

The frictional power-transmission belt transmits the power while causing a slight slip between the pulley and the belt, and therefore rotation of a driving pulley and rotation of a driven pulley do not always coincide with each other. On the other hand, as can be seen from a fact that synchronous power-transmission is also referred to as synchronized power-transmission, no slip occurs between the pulley and the belt in the synchronous power-transmission belt, and rotation of a driving pulley is basically synchronized with rotation of a driven pulley. Therefore, when it is desired to accurately maintain a rotation ratio between the driving pulley and the driven pulley, the synchronous power-transmission belt is used instead of the frictional power-transmission belt.

It should be noted that when the synchronous power-transmission belt is used, there is a phenomenon called "tooth jumping" or "jumping" in which the tooth portion of the synchronous power-transmission belt passes over a tooth groove of the pulley and moves to an adjacent tooth groove. When the jumping occurs, it is not only that to accurately maintain the rotation ratio between the driving pulley and the driven pulley is impossible, but also that an excessive force acts on the belt and a pulley shaft, thereby damaging the entire power-transmission system. Therefore, when the synchronous power-transmission belt is used, it is essential to design the synchronous power-transmission belt not to cause the jumping.

CITATION LIST

Non Patent Literature

NPL 1: Koyama, T., Zhang, W., Nishiguchi, A. and Kagotani, M., 123 A Study on Jumping of synchronous Belt Drives (Mechanisms of Jumping), Proceedings of The Machine Design and Tribology Division 2nd Meeting in The Japan Society of Mechanical Engineers [No.02-12] , 2002, 2002.2 Volume,p.107-110

SUMMARY OF INVENTION

TECHNICAL PROBLEM

In this regard, as research on the jumping of the toothed belt, there is the paper by Koyama et al. (see NPL 1). According to the paper, in a case of a 2-shaft layout of pulleys having the same diameter, the jumping occurs when a belt tooth rides on a pulley tooth at a meshing start portion (a belt slack side) of a driven pulley. A jumping torque (a maximum transmission torque immediately before the belt tooth completely rides on the pulley tooth) has been considered difficult to predict because the jumping torque is affected by various factors such as a tooth shape, a physical property of the belt, a belt length, a pitch difference between the belt and the pulley, a friction factor, a pulley layout, the number of pulley teeth, an operation condition, and an installation tension. Therefore, in the related art, the jumping torque can only be measured by attaching the toothed belt to an actual machine, which requires a great deal of cost and time.

Therefore, an object of the present invention is to make it easy to present a user with an optimal synchronous power-transmission belt that does not cause jumping by accurately calculating a predicted value of a jumping torque of a toothed belt without actually measuring the jumping torque.

SOLUTION TO PROBLEM

The present invention is a calculation control method for a predicted value of a jumping torque Tq of a toothed belt configured to be wound around a layout including a driving pulley and a driven pulley, the calculation control method including:

(1a) causing, by a control device, a storage device to store
values of parameters of a correlation value ES between a force and a strain in a tensile test of the toothed belt, a tooth height h, a pulley pitch diameter Rr of the driving pulley, and a pulley pitch diameter Rn of the driven pulley, the correlation value ES being obtained by multiplying an equivalent longitudinal elastic modulus E in a belt longitudinal direction and a cross-sectional area S of the toothed belt,
values of parameters of an initial tension $T_0$, a tight-side span length Lt, a slack-side span length Ls, a winding angle θr of the toothed belt on the driving pulley, and a winding angle θn of the toothed belt on the driven pulley, when the toothed belt is wound around the driving pulley and the driven pulley, and
a value of a teeth in mesh correction factor Kmn of the driven pulley and a value of an overall correction factor K;
(1b) substituting, by the control device, the values of the parameters, the value of the overall correction factor K, and the value of the teeth in mesh correction factor Kmn stored in (1a) into Equations (1) to (3) to calculate the predicted value of the jumping torque Tq; and
(1c) outputting, by the control device, the predicted value of the jumping torque Tq calculated in (1b).

The value of the teeth in mesh correction factor Kmn of the driven pulley and the value of the overall correction factor K are values determined in advance at which an average value of a difference obtained by comparing a calculated value of the jumping torque Tq when the values of the parameters are substituted into Equations (1) to (3) and an actual measurement value of the jumping torque Tq is minimized.

$$T_q = K \left[ \frac{A + B}{A} T_0 + K_{mn} \frac{ES \cdot h\theta_n}{A} \right] R_n \qquad \text{EQUATION (1)}$$

$$A = L_t + \frac{R_r \theta_r + R_n \theta_n}{2} \qquad \text{EQUATION (2)}$$

$$B = L_s + \frac{R_r \theta_r + R_n \theta_n}{2} \qquad \text{EQUATION (3)}$$

According to the method, it is possible to calculate the predicted value of the jumping torque Tq which is relatively close to the actual measurement value except when the toothed belt has a special specification and when a traveling speed of the toothed belt is high.
In addition, the present invention is a calculation control method for a predicted value of a jumping torque Tq of a toothed belt configured to be wound around a layout including a driving pulley and a driven pulley, the calculation control method including:

(2a) causing, by a control device, a storage device to store
values of parameters of a correlation value ES between a force and a strain in a tensile test of the toothed belt, a tooth height h, a pulley pitch diameter Rr of the driving pulley, and a pulley pitch diameter Rn of the driven pulley, the correlation value ES being obtained by multiplying an equivalent longitudinal elastic modulus E in a belt longitudinal direction and a cross-sectional area S of the toothed belt,
values of parameters of an initial tension $T_0$, a tight-side span length Lt, a slack-side span length Ls, a winding angle θr of the toothed belt on the driving pulley, and a winding angle θn of the toothed belt on the driven pulley, when the toothed belt is wound around the driving pulley and the driven pulley,
values of parameters of a centrifugal tension Tc that is a tension generated by a centrifugal force of the toothed belt and is calculated based on the layout, a line density m of the toothed belt, a traveling speed V of the toothed belt, a centrifugal force correction factor Kc for correction based on the centrifugal force according to a mass and the traveling speed of the toothed belt that travels in the layout, and a belt correction factor Kb for correcting a hardness of a tooth of the toothed belt and a difference in a friction factor, and
a value of a teeth in mesh correction factor Kmn of the driven pulley and a value of an overall correction factor K;

(2b) substituting, by the control device, the values of the parameters, the value of the overall correction factor K, and the value of the teeth in mesh correction factor Kmn stored in (2a) into Equations (2) to (5) to calculate the predicted value of the jumping torque Tq; and

(2c) outputting, by the control device, the predicted value of the jumping torque Tq calculated in (2b).

The value of the teeth in mesh correction factor Kmn of the driven pulley and the value of the overall correction factor K are values determined in advance at which an average value of a difference obtained by comparing a calculated value of the jumping torque Tq when the values of the parameters are substituted into Equations (1) to (3) and an actual measurement value of the jumping torque Tq is minimized.

$$T_q = K \left[ \frac{A+B}{A} T_0 + K_{mn} \frac{ES \cdot h\theta_n}{A} \right] R_n \qquad \text{EQUATION (1)}$$

$$A = L_t + \frac{R_r \theta_r + R_n \theta_n}{2} \qquad \text{EQUATION (2)}$$

$$B = L_s + \frac{R_r \theta_r + R_n \theta_n}{2} \qquad \text{EQUATION (3)}$$

$$T_q = K \left[ \frac{A+B}{A} (T_0 - K_c \cdot T_c) + K_b K_{mn} \frac{ES \cdot h\theta_n}{A} \right] R_n \qquad \text{EQUATION (4)}$$

$$T_c = mV^2 \qquad \text{EQUATION (5)}$$

In the method, the predicted value of the jumping torque Tq can be calculated in consideration of the centrifugal force correction factor Kc for the correction based on the centrifugal force according to the mass and the traveling speed of the toothed belt that travels in the layout including the driving pulley and the driven pulley and the belt correction factor Kb for correcting the hardness of the tooth of the toothed belt and the difference in the friction factor. Therefore, even when the toothed belt has a special specification and the traveling speed of the toothed belt is high, an accuracy of the predicted value of the jumping torque Tq can be improved.

In addition, the present invention may be the above calculation control method for a predicted value of a jumping torque Tq, and the method may further include:

(2d) calculating an effective tension Ten that is a difference between a tight-side tension and a slack-side tension of the driven pulley and is determined from Equation (6) indicating a correlation between a predicted value Tqn of the jumping torque Tq in the driven pulley calculated in (2b) and the effective tension Ten;

(2e) further causing the storage device to store a teeth in mesh correction factor Kmr of the driving pulley determined in advance by a method similar to a method for determining the value of the teeth in mesh correction factor Kmn of the driven pulley;

(2f) further calculating an effective tension Ter that is a difference between a tight-side tension and a slack-side tension of the driving pulley and is determined from Equation (7) indicating a correlation between a predicted value Tqr of the jumping torque Tq in the driving pulley calculated by substituting the value of the teeth in mesh correction factor Kmr stored in (2e) into Equation (7) and the effective tension Ter;

(2g) comparing magnitudes of the effective tension Ten and the effective tension Ter, and determining the predicted value Tqn as the predicted value of the jumping torque Tq in the entire layout when Ten $\leq$ Ter and determining the predicted value Tqr as the predicted value of the jumping torque Tq in the entire layout when Ten > Ter; and

(2h) in (2c), outputting the predicted value of the jumping torque Tq determined in (2g).

$$T_{qn} = K\left[\frac{A+B}{A}(T_0 - K_c \cdot T_c) + K_b K_{mn}\frac{ES \cdot h\theta_n}{A}\right]R_n = T_{en}R_n \qquad \text{EQUATION (6)}$$

$$T_{qr} = K\left[\frac{A+B}{A}(T_0 - K_c \cdot T_c) + K_b K_{mr}\frac{ES \cdot h\theta_r}{A}\right]R_r = T_{er}R_r \qquad \text{EQUATION (7)}$$

For example, when the number of teeth of the driven pulley and the number of teeth of the driving pulley are the same in a 2-shaft layout, the jumping always occurs in the driven pulley. Therefore, by calculating a predicted value of the jumping torque Tq in the driven pulley based on Equation (4), a predicted value of the jumping torque Tq in the entire layout can be calculated.

However, when the number of teeth of the driven pulley is considerably large with respect to the number of teeth of the driving pulley (a reduction ratio is large) or when the winding angle of the toothed belt on the driving pulley in a layout of three or more shafts is small, the jumping may occur in the driving pulley. In such a case, even when only the jumping torque in the driven pulley is calculated, the jumping occurs in the driving pulley with a torque lower than the jumping torque obtained by the calculation. Therefore, it cannot be said that the jumping torque in the entire layout is calculated.

Therefore, a jumping torque in the driven pulley and a jumping torque in the driving pulley are calculated, a jumping torque having a lower effective tension is adopted as the jumping torque in the entire layout, and an accuracy of the predicted value of the jumping torque can be farther improved.

ADVANTAGEOUS EFFECTS OF INVENTION

It is possible to easily present a user with an optimal synchronous power-transmission belt that does not cause the jumping by accurately calculating a predicted value of a jumping torque of a toothed belt without actually measuring the jumping torque.

BRIEF DESCRIPTION OF DRAWINGS

FIG. 1 is an explanatory drawing of a power-transmission system in which a toothed belt is wound around a driving pulley and a driven pulley according to the present embodiment.

FIG. 2 is a partially cutaway explanatory drawing of a toothed belt wound around a driving pulley.

FIG. 3 is an explanatory drawing of a mechanism in which the jumping occurs.

FIG. 4 is an explanatory drawing relating to lifting of a toothed belt on a driven pulley when the jumping occurs.

FIG. 5 is a diagram showing a correlation between a tension T and an effective tension Te of a toothed belt in a driving state of a power-transmission system.

FIG. 6 is a schematic explanatory diagram of an information processing apparatus.

FIGS. 7A to 7D are schematic explanatory drawings of layouts 1 to 4, respectively.

FIG. 8A is a diagram showing test results of Test Examples 1 to 3. FIG. 8B is a diagram showing test results of Test Examples 4 to 8.

FIG. 9A is a graph showing a correlation between B/A and an overall correction factor K in Equation (13). FIG. 9B is a graph showing a correlation between the number of meshing teeth Zmn of a driven pulley and a teeth in mesh correction factor Kmn of the driven pulley in Equation (14).

FIG. 10A is a diagram showing test results of Test Examples 9 to 13. FIG. 10B is a diagram showing test results of Test Examples 14 to 16.

FIG. 11 is a graph showing a correlation between a value of (Hs/(100 - Hs) · μ) and a belt correction factor Kb when values in Table 5 are substituted into Equation (16).

FIG. 12A is a diagram showing test results of Test Examples 17 to 19. FIG. 12B is a diagram showing test results of Test Examples 20 to 25.

FIG. 13 is a graph showing a correlation between B/A and a centrifugal force correction factor Kc in Equation (17).

FIG. 14A is a graph summarizing a condition under which the jumping occurs in a driving pulley (a tooth profile S8M of a toothed belt). FIG. 14B is a graph summarizing a condition under which the jumping occurs in a driven pulley (a tooth profile S8M of a toothed belt).

FIG. 15A is a graph summarizing a condition under which the jumping occurs in a driving pulley (a tooth profile S3M of a toothed belt). FIG. 15B is a graph summarizing a condition under which the jumping occurs in a driven pulley (a tooth profile S3M of a toothed belt).

DESCRIPTION OF EMBODIMENTS

(Embodiment)

Hereinafter, an embodiment according to the present invention will be described with reference to the drawings.

First, a toothed belt 1 (a synchronous power-transmission belt), and a driving pulley DR and a driven pulley DN around which the toothed belt 1 is wound, which constitute a power-transmission system, will be described.

(Power-Transmission System)

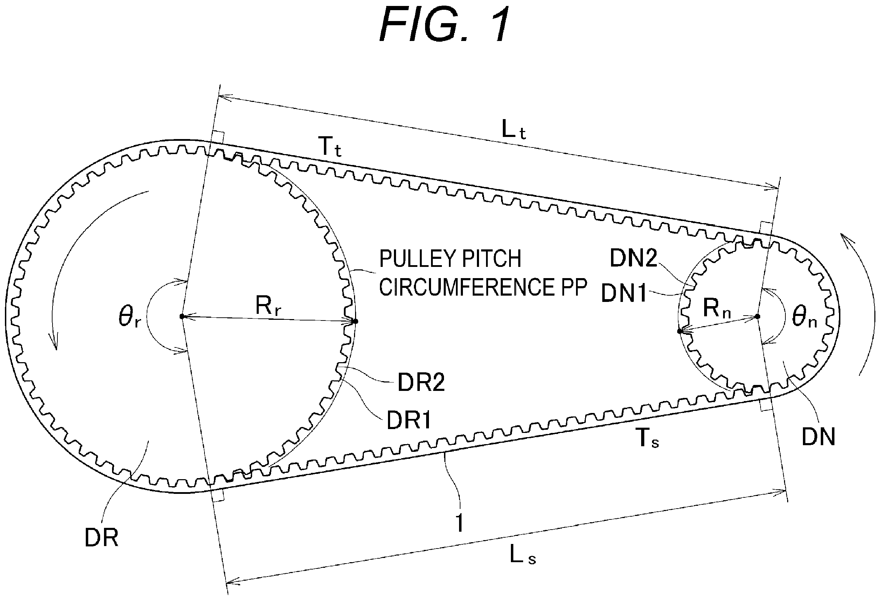

As shown in FIG. 1, the toothed belt 1 is wound around the driving pulley DR connected to a driving rotary shaft and the driven pulley DN connected to a driven rotary shaft. Accordingly, when the driving rotary shaft rotates, the driving pulley DR rotates. A rotational motion thereof is transmitted to the driven pulley DN via the toothed belt 1, the driven rotary shaft rotates, and power is transmitted.

(Toothed Belt 1)

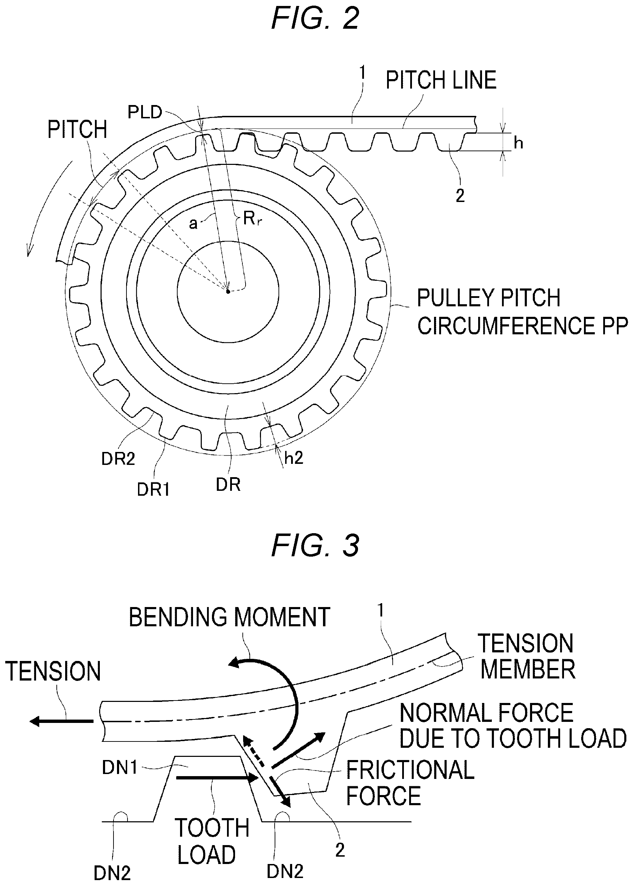

The toothed belt 1 is formed of a rubber elastic body, and as shown in FIGS. 1 and 2, protruded tooth portions 2 are disposed on an inner peripheral surface of the toothed belt 1 at constant tooth pitches along a belt longitudinal direction. As shown in FIG. 2, a distance from a tip of the tooth portion 2 to a bottom land of the tooth portion 2 in a belt thickness direction is a tooth height h of the tooth portion 2.

In a back portion of the toothed belt 1, a tension member is embedded in a state of being spirally wound along the belt longitudinal direction, and is disposed at predetermined intervals in a cross-sectional view in a belt width direction.

The rubber elastic body constituting the toothed belt 1 is formed of a rubber, an elastomer, a synthetic resin, or the like. The rubber elastic body preferably contains a rubber (a crosslinked rubber). The rubber elastic body preferably has a JISA hardness of 70 degrees or more. A cord having a high elasticity and a high strength is used as the tension member. The tension member is formed of, for example, a carbon fiber, an aramid fiber, a glass fiber, or the like. The tension member may be subjected to an adhesion treatment for a purpose of enhancing adhesion to the rubber elastic body. A mating flank (the inner peripheral surface) of the toothed belt 1 may be covered with a facing fabric.

(Driving Pulley DR)

The driving pulley DR is formed of a synthetic resin such as polyacetal, nylon, and polypropylene, or a metal. As shown in FIGS. 1 and 2, a plurality of tooth portions DR1 are formed on an outer peripheral surface of the driving pulley DR at constant pitches along a circumferential direction. The tooth portion 2 of the toothed belt 1 meshes with a groove portion DR2 formed between the tooth portion DR1 and the tooth portion DR1. In the present embodiment, a radius Rr of the driving pulley DR (a pulley pitch diameter of the driving pulley DR) refers to a distance from a center of the driving pulley DR to a pulley pitch circumference PP (as shown in FIG. 2, a circumference connecting a center of the tension member when the toothed belt 1 is wound around the driving pulley DR). In other words, the radius Rr of the driving pulley DR is a value obtained by adding a distance PLD (Pitch Line Differential) from a tip of the tooth portion DR1 to the pulley pitch circumference PP (the center of the tension member) to a distance a from the center of the driving pulley DR to the tip of the tooth DR1.

A groove depth h2 (see FIG. 2) of the groove portion DR2 of the driving pulley DR is preferably larger than the tooth height h of the tooth portion 2, but may be substantially the same as the tooth height h of the tooth portion 2.

As shown in FIG. 2, in a driving state of the power-transmission system, the tooth portion DR1 of the driving pulley DR and a part of a surface of the tooth portion 2 on a side opposite to a belt traveling direction (an arrow direction in FIG. 2) are in surface contact with each other. As shown in FIG. 1, in the driving state, an angle at which the toothed belt 1 on an outer periphery of the driving pulley DR and the driving pulley DR are in contact with each other is defined as a winding angle θr (rad).

(Driven Pulley DN)

Similar to the driving pulley DR, the driven pulley DN is formed of a synthetic resin such as polyacetal, and polypropylene, or a metal. As shown in FIGS. 1 and 2, a plurality of tooth portions DN1 are formed on an outer peripheral surface of the driven pulley DN at constant pitches along a circumferential direction. The tooth portion 2 of the toothed belt 1 meshes with a groove portion DN2 formed between the tooth portion DN1 and the tooth portion DN1. In the present embodiment, a radius Rn of the driven pulley DN (a pulley pitch diameter of the driven pulley DN) refers to a distance from a center of the driven pulley DN to the pulley pitch circumference PP. In other words, the radius Rn of the driven pulley DN is a value obtained by adding the distance PLD from a tip of the tooth DN1 to the pulley pitch circumference PP (the center of the tension member) to a distance b from the center of the driven pulley DN to the tip of the tooth portion DN1.

A groove depth h3 (not shown) of the groove portion DN2 of the driven pulley DN is preferably larger than the tooth height h of the tooth portion 2, but may be substantially the same as the tooth height h of the tooth portion 2.

As shown in FIG. 1, in the driving state of the power-transmission system, the tooth portion DN1 of the driven pulley DN and a part of a surface of the tooth portion 2 in the belt traveling direction (an arrow direction in FIG. 1) are in surface contact with each other. As shown in FIG. 1, in the driving state, an angle at which the toothed belt 1 on an outer periphery of the driven pulley DN and the driven pulley DN are in contact with each other is defined as a winding angle θn (rad).

Here, in the driving state of the power-transmission system, the toothed belt 1 is stretched by an increase in a tension in a tight-side span of the toothed belt 1. It is considered that belt elongation of the toothed belt 1 in the tight-side span is absorbed by the toothed belt 1 floating on the driven pulley DN (rising to an outer peripheral side). When transmission power is further increased, it is considered that a belt elongation amount of the toothed belt 1 in the tight-side span is not sufficiently absorbed by a belt elongation amount corresponding to the floating of the toothed belt 1 on the driven pulley DN, and the jumping occurs in which the tooth portion 2 of the toothed belt 1 moves over the tooth portion DN1 of the driven pulley DN to the adjacent groove portion DN2 (see FIG. 3). In the present embodiment, a maximum transmission torque immediately before the tooth portion 2 of the toothed belt 1 completely rides on the tooth portion DN1 of the driven pulley DN (immediately before the jumping occurs) is defined as a jumping torque Tq.

(Information Processing Apparatus 10)

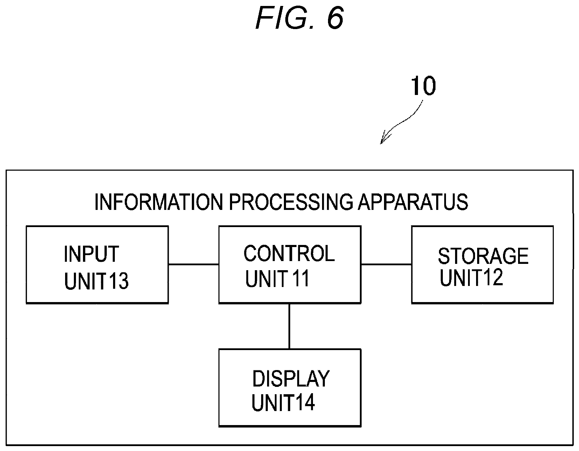

As shown in FIG. 6, an information processing apparatus 10 is a general-purpose computer used to calculate the jumping torque Tq, and can be operated by a user to input various types of data and requests, store the data, and perform calculation. The information processing apparatus 10 according to the present embodiment includes a control unit 11 (a control device), a storage unit 12 (a storage device), an input unit 13, and a display unit 14 (a display device).

The control unit 11 (a CPU or the like) performs computer control in the information processing apparatus 10.

The storage unit 12 includes a read only memory (ROM) in which system programs are stored, a random access memory (RAM) that is a rewritable storage region, a flash memory, and the like.

The input unit 13 is an operation device for the user to input various types of data, requests, and commands, and for example, a keyboard and a mouse are used.

The display unit 14 displays information based on a command from the control unit 11.

Here, in the present embodiment, the storage unit 12 stores an information table in which values of various parameters used for calculating the jumping torque Tq to be described later are stored, and a program including an algorithm used for calculating the jumping torque Tq.

Specifically, in the information table of the storage unit 12, by an input from the input unit 13, values of various parameters of an equivalent longitudinal elastic modulus E of the toothed belt 1 in the belt longitudinal direction, a cross-sectional area S of the toothed belt 1, a value (ES) obtained by multiplying the longitudinal elastic modulus E and the cross-sectional area S based on a correlation between a force and a strain in a tensile test of the toothed belt 1, the tooth height h of the toothed belt 1, the radius Rr of the driving pulley DR (the pulley pitch diameter of the driving pulley DR), and the radius Rn of the driven pulley DN (the pulley pitch diameter of the driven pulley DN), and values of various parameters of an initial tension $T_0$, a tight-side span length Lt (see FIG. 1), a slack-side span length Ls (see FIG. 1), the winding angle θr (rad) at which the toothed belt 1 on the outer periphery of the driving pulley DR and the driving pulley DR come into contact with each other, and the winding angle θn (rad) at which the toothed belt 1 on the outer periphery of the driven pulley DN and the driven pulley DN come into contact with each other when the toothed belt 1 is wound around the driving pulley DR and the driven pulley DN are stored. In addition, as will be described in detail later, an overall correction factor K and a teeth in mesh correction factor Kmn of the driven pulley are stored, which are determined in advance as values at which an average value of a difference obtained by comparing a calculated value of the jumping torque and an actual measurement value of the jumping torque is minimized when the values of various parameters are substituted into the following Equations (1) to (3). In addition, as will be described in detail later, values of various parameters are stored, such as a centrifugal tension Tc generated by a centrifugal force of the toothed belt 1 and calculated based on a layout including the driving pulley DR and the driven pulley DN, a line density m of the toothed belt 1 (a mass per unit length of the toothed belt 1, which is stored in a program), a traveling speed V of the toothed belt 1, a centrifugal force correction factor Kc for correction based on the centrifugal force according to a mass and the traveling speed V of the toothed belt 1 traveling in the layout, a belt correction factor Kb for correcting differences in a hardness and a friction factor of the tooth portion 2 of the toothed belt 1, and a teeth in mesh correction factor Kmr of the driving pulley. Here, the tight-side span length Lt is a distance between contact points of the toothed belt on a side where the toothed belt starts to mesh with the driving pulley and the pulley, and the slack-side span length Ls is a distance between contact points of the toothed belt on a side where the meshing between the toothed belt and the driving pulley is released and the pulley. The ES value is a value obtained by dividing a difference in a belt tension under loads at two predetermined points (for example, loads corresponding to a mounting tension of the belt and a maximum effective tension applied at a time of the jumping) by a change rate of the belt length, and multiplying the calculated value by 100. The loads are applied in a direction in which the toothed belt is stretched in a state that the annular toothed belt is wound around a pair of pulleys. The initial tension $T_0$ can be measured by a known method such as measurement using a sonic tension meter.

In addition, the storage unit 12 stores a program incorporating the following Equations (1) to (7) for reading the various parameters stored in the information table and calculating the predicted value of the jumping torque Tq as the algorithm used for calculating the jumping torque Tq.

In the power-transmission system, an actual measurement value of a tension distribution on the driven pulley DN, particularly, an actual measurement value of a tension distribution immediately before the jumping occurs is not constant, and the tension distribution continuously changes in a form close to a quadratic curve from a slack side to a tight-side also in the driving pulley DR and the driven pulley DN. Hence, a tight-side effective span length "A" and a slack-side effective span length "B" of the toothed belt 1 are calculated by using Equations (2) and (3) with the tight-side effective span length "A" and the slack-side effective span length "B" each being a distance between the center of wound portion of the driving pulley DR and the center of wound portion of the driven pulley DN.

(Simple Correction Equation)

$$T_q = K \left[ \frac{A+B}{A} T_0 + K_{mn} \frac{ES \cdot h\theta_n}{A} \right] R_n \qquad \text{EQUATION (1)}$$

$$A = L_t + \frac{R_r \theta_r + R_n \theta_n}{2} \qquad \text{EQUATION (2)}$$

$$B = L_s + \frac{R_r \theta_r + R_n \theta_n}{2} \qquad \text{EQUATION (3)}$$

(Final Correction Equation)

$$T_q = K \left[ \frac{A+B}{A} (T_0 - K_c \cdot T_c) + K_b K_{mn} \frac{ES \cdot h\theta_n}{A} \right] R_n \qquad \text{EQUATION (4)}$$

$$T_c = mV^2 \qquad \text{EQUATION (5)}$$

(Jumping Torque Considering Case where Jumping Occurs in Driving Pulley)

$$T_{qn} = K \left[ \frac{A+B}{A}(T_0 - K_c \cdot T_c) + K_b K_{mn} \frac{ES \cdot h\theta_n}{A} \right] R_n = T_{en}R_n \qquad \text{EQUATION (6)}$$

$$T_{qr} = K \left[ \frac{A+B}{A}(T_0 - K_c \cdot T_c) + K_b K_{mr} \frac{ES \cdot h\theta_r}{A} \right] R_r = T_{er}R_r \qquad \text{EQUATION (7)}$$

(Description of Simple Correction Equation)

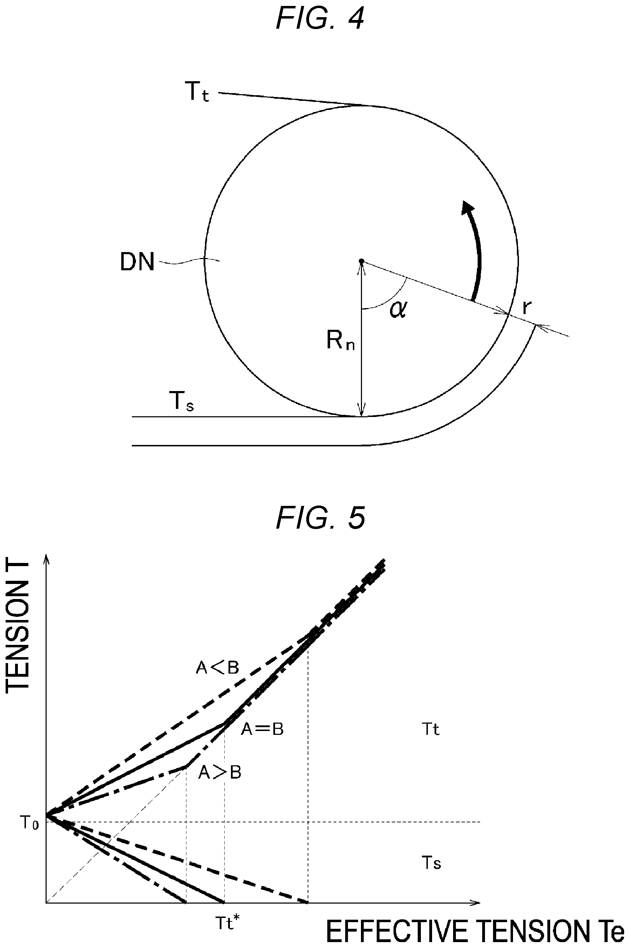

A calculation process of Equation (1) described above will be described. In the power-transmission system, in a state that the driving rotary shaft is stationary, tensions of two spans of the tight-side span length Lt and the slack-side span length Ls in which the toothed belt 1 is not in contact with the driving pulley DR and the driven pulley DN are equally balanced (the initial tension: $T_0$). When the driving rotary shaft starts rotating, a tension of the tight-side span entering the driving pulley DR (a tight-side tension: Tt) increases, and a tension of a slack-side span on a side coming out of the driving pulley DR (a slack-side tension: Ts) decreases. The tension difference (an effective tension: Te = Tt - Ts) causes the driven pulley DN to rotate. As the transmission power increases, the Tt increases (Tt = $T_0$ + (B/A + B)Te), and the Ts decreases (Ts = $T_0$ - (A/A + B)Te). The tight-side tension when Ts = 0 is calculated as Tt* = (A + B)$T_0$/A, namely (Tt = Tt*) (see FIG. 5). When Tt > Tt*, Tt = Te.

As described above, in the driving state of the power-transmission system, the toothed belt 1 is stretched by the increase in the tension in the tight-side span thereof. It is considered that belt elongation of the toothed belt 1 in the tight-side span is absorbed by the toothed belt 1 floating on the driven pulley DN (rising to an outer peripheral side). When the transmission power is further increased, it is considered that a belt elongation amount x (see Equation (8): conditions of Tt > Tt* and Tt = Te) of the toothed belt 1 in the tight-side span is not sufficiently absorbed by a belt elongation amount y corresponding to the floating (a floating amount r) of the toothed belt 1 on the driven pulley DN, and the jumping occurs. A maximum transmission torque T immediately before the jumping occurs is referred to as the jumping torque Tq. As shown in FIG. 3, it is considered that a reason why the belt floats from a slack side of the wound portion of the pulley is that the slack-side tension becomes 0, a belt pressing force becomes 0, and an influence of a bending moment due to a tooth load when the belt teeth mesh with the pulley teeth and an influence of a belt push-up force that is a perpendicular component of a normal force and a frictional force due to the tooth load appear remarkably.

$$x = (T_t - T_t^*) \frac{A}{ES} \qquad \text{EQUATION (8)}$$

Here, the tight-side tension Tt in Equation (2) satisfies theoretically Tt = Te as described above, but actually, the slack-side tension Ts is not 0, and in particular, the slack-side tension Ts in the vicinity of the jumping tends to increase together with a burden. Therefore, when the correction factor K ($\leq$ 1) obtained experimentally is taken into consideration and the belt elongation amount x is calculated as the Te = KTt, the belt elongation amount x of the toothed belt 1 in the tight-side span at the time of the jumping is expressed by Equation (9) instead of Equation (8).

$$x = \left( \frac{T_e}{K} - T_t^* \right) \frac{A}{ES} \qquad \text{EQUATION (9)}$$

On the other hand, as shown in FIG. 4, when the jumping occurs, the floating amount r becomes equal to the tooth height h of the toothed belt 1 (r = h), and an angle $\alpha$ (rad) of a floating portion of the toothed belt 1 on the driven pulley DN is assumed to correspond to the winding angle $\theta$n at which the toothed belt 1 and the driven pulley DN are in contact with each other ($\alpha$ = $\theta$n). Further, since the belt elongation amount x of the tight-side span becomes equal to the belt elongation amount y (y = (Rn + r)$\alpha$ - Rn$\alpha$ = r$\alpha$) corresponding to the floating (the floating amount r) of the toothed belt 1 on the driven pulley DN, Equation (10) is derived.

$$x = y = h\theta_n \qquad \text{EQUATION (10)}$$

However, it is presumed that an effective tooth height during the actual jumping is different from the tooth height h of the toothed belt 1 for the following reasons.

(a) Deformation of the belt tooth reduces the effective tooth height.
(b) All meshing teeth of the wound portion of the toothed belt 1 at the time of the jumping do not always float uniformly.
(c) The floating of the wound portion due to the belt elongation of the tight-side span occurs not in one of the driven pulley DN and the driving pulley DR, but in both pulleys although floating amounts thereof are different.
(d) In the jumping on the driving pulley DR, all of the tooth portions 2 need to move over the tooth portions DR1, but the jumping occurs on the driven pulley DN even when all of the tooth portions 2 do not move over the tooth portions DN1.

For the reasons described above, the belt elongation amount y of the wound portion at the time of the jumping is calculated by Equation (11) instead of Equation (10), and the teeth in mesh correction factor Kmn of the driven pulley DN is experimentally obtained similarly to the correction factor K.

$$x = y = K_m \cdot h\theta_n \qquad \text{EQUATION (1 1)}$$

Then, when the Te is derived from Equations (9) and (11), Equation (12) is obtained.

$$T_e = K \left( T_t^* + K_{mn} \frac{ES \cdot h\theta_n}{A} \right) = K \left[ \frac{A+B}{A} T_0 + K_{mn} \frac{ES \cdot h\theta_n}{A} \right] \qquad \text{EQUATION (1 2)}$$

Then, when the jumping torque Tq (Tq = Te · Rn), which is the maximum transmission torque immediately before the jumping occurs, is derived, Equation (1) at the beginning is obtained.

(Description of Final Correction Equation)

The predicted value of the jumping torque Tq is calculated by Equation (4), which is the final correction equation described above, more accurately than with Equation (1) which is a simple correction equation.
Specifically, the predicted value of the jumping torque Tq is calculated by Equation (4), which is the final correction equation, by further taking into account the centrifugal force correction factor Kc for correction based on the centrifugal tension Tc according to the mass m (the line density m of the toothed belt 1) and the traveling speed V of the toothed belt 1 traveling in the layout including the driving pulley DR and the driven pulley DN and the belt correction factor Kb for correcting the hardness of tooth of the toothed belt and a difference in the friction factor into Equation (1). Therefore, even when the toothed belt 1 has a special specification and the traveling speed V of the toothed belt 1 is high, an accuracy of the predicted value of the jumping torque Tq can be improved. Here, the line density m refers to a mass per unit length of the toothed belt 1 and is stored in the program. The traveling speed V is calculated based on an input layout. The centrifugal tension Tc is the tension generated by the centrifugal force of the toothed belt 1 and is calculated based on the input layout. The correction factors will be described later.
Conversely, Equation (1) is a simplified equation of Equation (4) with Kb = 1 and Kc = 0. Kb = 1 is a value for a standard specification belt (SUPER TORQUE G of our company), and Kc = 0 means that the correction of the centrifugal tension Tc can be ignored when the traveling speed V of the toothed belt is low. That is, when the standard specification belt is used at a low speed, both Equations (1) and (4) give approximately the same results.

(Calculation of Jumping Torque Considering Case where Jumping Occurs in Driving Pulley)

When the number of teeth of the driven pulley DN and the number of teeth of the driving pulley DR are the same in a 2-shaft layout, the jumping always occurs in the driven pulley DN. Therefore, by calculating a jumping torque in the driven pulley DN based on Equation (4), the jumping torque Tq in the entire layout can be calculated.
However, when the number of teeth of the driven pulley DN is considerably large with respect to the number of teeth of the driving pulley DR (a reduction ratio is large) or when the winding angle θr of the toothed belt 1 on the driving pulley DR in a layout of three or more shafts is small, the jumping may occur in the driving pulley DR.
In such a case, even when only the jumping torque in the driven pulley DN is calculated, the jumping occurs in the driving pulley DR with a torque lower than the jumping torque obtained by the calculation. Therefore, it cannot be said that the jumping torque in the entire layout is calculated.
Therefore, a jumping torque Tqn in the driven pulley DN and a jumping torque Tqr in the driving pulley DR are calculated, a jumping torque having a lower effective tension is adopted as the jumping torque Tq in the entire layout, and a prediction accuracy can be further increased.

Specifically, after the jumping torques are calculated by both Equation (6) for calculating the jumping torque Tqn in the driven pulley DN and Equation (7) for calculating the jumping torque Tqr in the driving pulley DR, magnitudes of an effective tension Ten (a difference between a tight-side tension and a slack-side tension in the driven pulley DN) and an effective tension Ter (a difference between the tight-side tension and the slack-side tension in the driving pulley DR) in the respective calculation formulas are compared. When Ten $\leq$ Ter, the jumping torque Tqn is adopted as the jumping torque Tq in the entire layout, and when Ten > Ter, the jumping torque Tqr is adopted as the jumping torque Tq in the entire layout. Magnitudes of the jumping torques Tqn and Tqr are not compared.

Equation (6) is obtained by adding additional letters meaning the driven pulley DN to Equation (4), and is substantially the same as Equation (4). In Equation (7), some parameters in Equation (4) are changed to the winding angle θr corresponding to the driving pulley DR, the radius Rr of the driving pulley DR (the pulley pitch diameter of the driving pulley DR), and the teeth in mesh correction factor Kmr of the driving pulley DR to calculate the jumping torque Tqn in the driving pulley DR, and the overall correction factor K, the centrifugal force correction factor Kc, and the belt correction factor Kb are the same as those used in Equation (4).

(Method of Determining Correction Factors)

The correction factors including the overall correction factor K, the centrifugal force correction factor Kc, the belt correction factor Kb, the teeth in mesh correction factor Kmn of the driven pulley, and the teeth in mesh correction factor Kmr of the driving pulley, which are expressed by Equations (1) to (12), are values calculated to be values at which the calculated value of jumping torque Tq is approximated to the actually measured jumping torque Tq.

An example of a method of determining each of the correction factors will be described below. However, the following equations and values are for a toothed belt having a specific specification or a specific tooth profile. When the toothed belt has another specification or another tooth profile, the following values are determined corresponding to the toothed belt having another specification or another tooth profile. Therefore, the correction factors and determination method thereof are not limited to the following examples.

(Determination of Overall Correction Factor K and Teeth in Mesh Correction Factor Km)

A jumping torque actual measurement value actually measured by testing machines configured as shown in layouts 1 to 4 to be described later and a jumping torque calculated value obtained by a calculation formula were compared, and the teeth in mesh correction factor Kmn of the driven pulley and the overall correction factor K were determined such that Equation (4) was well approximated to the jumping torque actual measurement value.

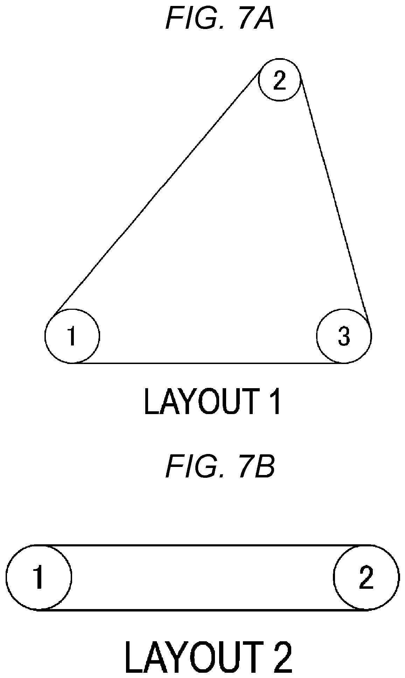

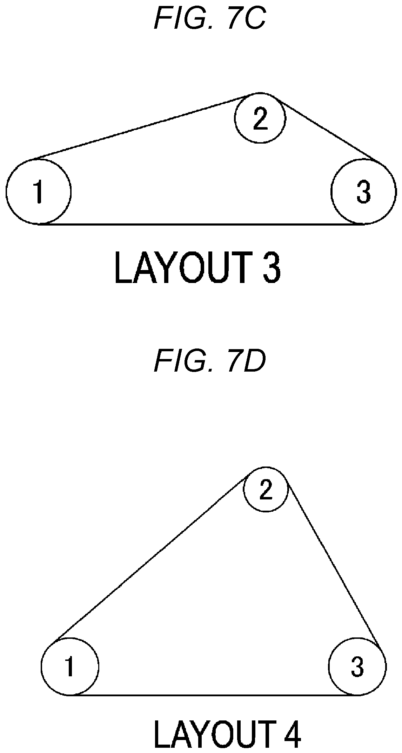

The measurement of the actual measurement value of the jumping torque using the testing machines was performed under test conditions shown in Table 2 in the layouts 1 to 4 shown in FIGS. 7A to 7D and Table 1.

Specifically, the driving pulley is rotated at a constant speed, and the rotation is transmitted to the driven pulley via the toothed belt. A burden on the driven pulley was increased at a constant speed, and a torque when the jumping occurred was recorded as the jumping torque. A test belt (a toothed belt) is a "SUPER TORQUE G" (a tooth profile: S8M, a tooth pitch: 8 mm, a tooth height (h): 3.05 mm, a hardness (Hs) of a tooth portion: 75 degrees, and a friction factor ($\mu$): 0.32) manufactured by Mitsuboshi Belting Ltd. This specification is referred to as a standard specification for a belt having a low friction specification and a high stiffness specification to be described later. In the present application, a hardness of the tooth portion refers to a JIS-A hardness measured by a type A durometer in accordance with JIS-K6253-3 (2012). In Equation (4), the belt correction factor Kb is incorporated as a factor for correcting the hardness of the tooth portion and a difference in the friction factor, and is set to Kb = 1 when the standard specification used in the present test is used. Since the present test is performed at a relatively low rotational speed of the driving pulley of 500 rpm, the centrifugal tension Tc is about 0.53 N at maximum, which is sufficiently small with respect to the initial tension $T_0$. Therefore, the centrifugal force correction factor Kc can be regarded as 0. Therefore, by setting Kb = 1 and Kc = 0 in Equation (4), the overall correction factor K and the teeth in mesh correction factor Km can be accurately determined.

In the present test, since all of the jumping occur in the driven pulley, the obtained correction factor Km is the teeth in mesh correction factor Kmn in the driven pulley.

In Table 1, a span length L represents a span length between a pulley and a pulley of a next number.

For example, in a case of a 3-shaft layout, a span length L of a pulley No. 1 represents a linear distance from a contact point of the pulley No. 1 closest to a pulley No. 2 among contact points thereof between the pulley and the belt to a contact point of the pulley No. 2 closest to the pulley No. 1 among contact points thereof between the pulley and the belt. Similarly, a span length L of the pulley No. 2 represents a linear distance from a contact point of the pulley No. 2 closest to a pulley No. 3 among the contact points thereof between the pulley and the belt to a contact point of the pulley No. 3 closest to the pulley No. 2 among contact points thereof between the pulley and the belt. Further, a span length L of the pulley No. 3 represents a linear distance from a contact point of the pulley No. 3 closest to the pulley No. 1 among the contact points thereof between the pulley and the belt to a contact point of the pulley No. 1 closest to the pulley No. 3 among the contact points thereof between the pulley and the belt.

In Table 1 showing the layouts, a pulley center-to-center distance represents a center-to-center distance between a pulley and a pulley of a next number.

For example, in a case of the 3-shaft layout, a center-to-center distance of the pulley No. 1 represents a linear distance from a center of the pulley No. 1 to a center of the pulley No. 2. Similarly, a center-to-center distance of the pulley No. 2 represents a linear distance from the center of the pulley No. 2 to a center of the pulley No. 3. Further, a center-to-center distance of the pulley No. 3 represents a linear distance from the center of the pulley No. 3 to the center of the pulley No. 1. Under the test conditions shown in Table 2, a rotation direction is a rotation direction of the driving pulley and the toothed belt, and CW is clockwise and CCW is counterclockwise in a top view of each of FIGS. 7A to 7D.

Table 1

| Layout 1 | | | | | | | |
|---|---|---|---|---|---|---|---|
| Pulley No. | Pulley name | Number of pulley teeth | Pulley diameter 2R (mm) | Winding angle θ (degrees) | Number of meshing teeth Zm | Span length L (mm) | Pulley center-to-center distance (mm) |
| 1 | Driving pulley | 30 | 76.39 | 129.39 | 10.78 | 466.25 | 466.33 |
| 2 | Idler pulley | 23 | 58.57 | 125.73 | 8.03 | 376.31 | 376.42 |
| 3 | Driven pulley | 30 | 76.39 | 104.88 | 8.73 | 377.00 | 377.00 |
| Layout 2 | | | | | | | |
| Pulley No. | Pulley name | Number of pulley teeth | Pulley diameter 2R (mm) | Winding angle θ (degrees) | Number of meshing teeth Zm | Span length L (mm) | Pulley center-to-center distance (mm) |
| 1 | Driving pulley | 30 | 76.39 | 180.00 | 15.00 | 344.00 | 344.00 |
| 2 | Driven pulley | 30 | 76.39 | 180.00 | 15.00 | 344.00 | 344.00 |
| Layout 3 | | | | | | | |
| Pulley No. | Pulley name | Number of pulley teeth | Pulley diameter 2R (mm) | Winding angle θ (degrees) | Number of meshing teeth Zm | Span length L (mm) | Pulley center-to-center distance (mm) |
| 1 | Driving pulley | 30 | 76.39 | 163.53 | 13.62 | 251.97 | 252.12 |
| 2 | Idler pulley | 23 | 58.57 | 49.91 | 3.18 | 131.70 | 132.00 |
| 3 | Driven pulley | 30 | 76.39 | 146.57 | 12.21 | 344.09 | 344.09 |
| Layout 4 | | | | | | | |
| Pulley No. | Pulley name | Number of pulley teeth | Pulley diameter 2R (mm) | Winding angle θ (degrees) | Number of meshing teeth Zm | Span length L (mm) | Pulley center-to-center distance (mm) |
| 1 | Driving pulley | 30 | 76.39 | 138.93 | 11.57 | 324.62 | 324.74 |
| 2 | Idler pulley | 23 | 58.57 | 103.46 | 6.61 | 243.61 | 243.77 |

(continued)

| Layout 4 | | | | | | | |
|---|---|---|---|---|---|---|---|
| Pulley No. | Pulley name | Number of pulley teeth | Pulley diameter 2R (mm) | Winding angle θ (degrees) | Number of meshing teeth Zm | Span length L (mm) | Pulley center-to-center distance (mm) |
| 3 | Driven pulley | 30 | 76.39 | 117.61 | 9.80 | 343.87 | 343.87 |

(Test Conditions)

Table 2

| Test Example | Layout No. | Rotation direction | Belt width W (mm) | Belt length (mm) | ES value (N) | Line density m (kg/m) | Initial tension $T_0$ (N) |
|---|---|---|---|---|---|---|---|
| 1 | 1 | CCW | 15 | 1440 | 273000 | 0.078 | 250, 500 |
| 2 | 1 | CCW | 20 | 1440 | 379000 | 0.104 | 346, 692 |
| 3 | 1 | CCW | 25 | 1440 | 488000 | 0.130 | 446, 894 |
| 4 | 2 | CW | 15 | 928 | 273000 | 0.078 | 125, 250, 500 |
| 5 | 3 | CW | 15 | 960 | 273000 | 0.078 | 125, 250, 500 |
| 6 | 3 | CCW | 15 | 960 | 273000 | 0.078 | 125, 250, 500 |
| 7 | 4 | CW | 15 | 1136 | 273000 | 0.078 | 125, 250, 500 |
| 8 | 4 | CCW | 15 | 1136 | 273000 | 0.078 | 125, 250, 500 |

(Test Results)

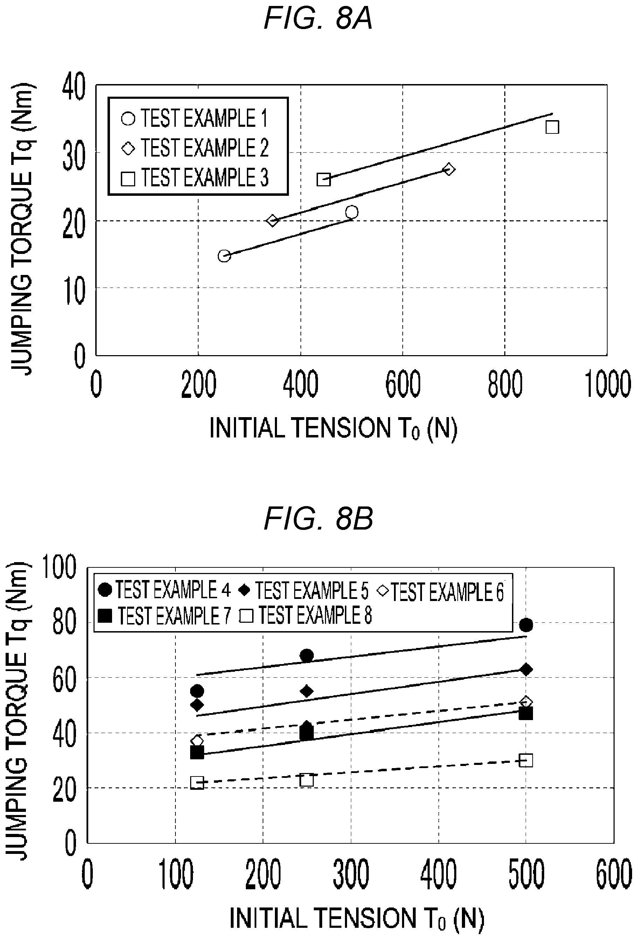

FIG. 8A shows results of Test Examples 1 to 3, and FIG. 8B shows results of Test Examples 4 to 8. In FIGS. 8A and 8B, circle plots, rhombus plots, and square plots represent actual measurement values of the jumping torque, and solid lines and broken lines represent calculated values of the jumping torque according to Equation (4).

From these test results, it can be seen that the jumping torque increases in proportion to the initial tension and also increases together with a belt width, in other words, the ES value of the belt.

Further, when the span lengths on the tight-side and the slack side are different from each other, the jumping torque is increased in a rotation direction (CW in this case) in which the span length on the tight-side is shortened, and validity of Equation (4) can be confirmed.

Next, the determination of the teeth in mesh correction factor Kmn of the driven pulley and the overall correction factor K will be described in detail. The teeth in mesh correction factor Kmn of the driven pulley and the overall correction factor K were determined by trial and error such that the average value between the difference obtained by comparing the jumping torque actual measurement values under the test conditions with the jumping torque calculated value when Kb = 1 and Kc = 0 in Equation (4) is minimized. More specifically, the teeth in mesh correction factor Kmn of the driven pulley and the overall correction factor K were determined by the following procedures [1] to [4].

[1] As shown in FIGS. 8A and 8B, the actual measurement values of the jumping torque were plotted on a graph having a vertical axis representing the jumping torque and a horizontal axis representing the initial tension.

[2] Further, the calculated values of the jumping torque when appropriate initial values (specifically, K = 0.5 and Km = 0.5) were input to K and Km were additionally plotted on the graph described above.

[3] A value of K was corrected such that a gradient of the calculated value of the jumping torque was close to a gradient of the actual measurement value of the jumping torque, and a value of Km was corrected such that the calculated value of the jumping torque corresponding to the corrected value of K was close to the actual measurement value.

[4] The procedures [2] and [3] were repeated, and K and Km were determined such that the average value of the differences between all the actual measurement values and the calculated value was minimized.

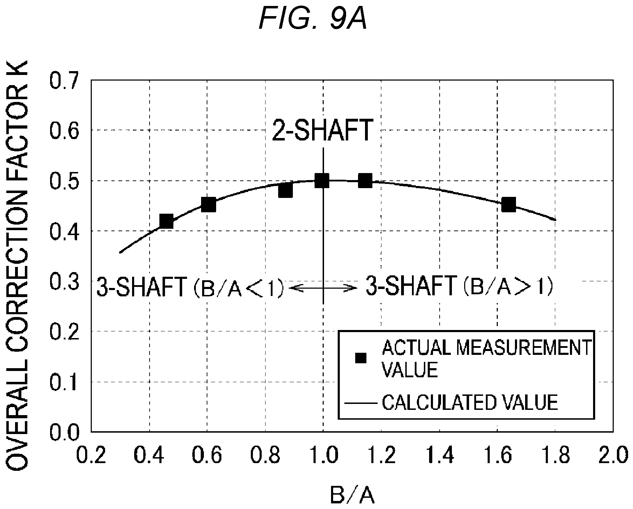

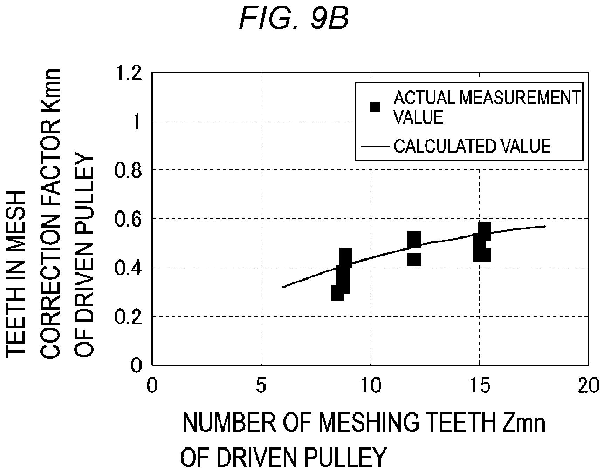

The teeth in mesh correction factor Kmn of the driven pulley and the overall correction factor K obtained by the procedures described above are expressed by the following Equations (13) and (14). Zmn is the number of meshing teeth of the driven pulley. FIG. 9A shows a graph showing a correlation between B/A and the overall correction factor K in Equation (13). FIG. 9B is a graph showing a correlation between the number of meshing teeth Zmn of the driven pulley and the teeth in mesh correction factor Kmn of the driven pulley in Equation (14).

$$K = 0.5 - a\left(\frac{B}{A} - 1\right)^2 \qquad \text{EQUATION（1 3）}$$

WHEN $B/A < 1$, $a = 0.290$
WHEN $B/A > 1$, $a = 0.120$

$$K_{mn} = 0.673 \times \left[1 - exp\left(-\frac{Z_{mn}}{9.51}\right)\right] \qquad \text{EQUATION（1 4）}$$

A method of obtaining the teeth in mesh correction factor Kmn of the driven pulley under the condition under which the jumping occurs in the driven pulley has been described above, and for example, the teeth in mesh correction factor Kmr of the driving pulley can be obtained by using a driven pulley having a large number of teeth to increase the reduction ratio and performing similar tests under a condition under which the jumping occurs in the driving pulley. The actually obtained Kmr is expressed by the following equation. In the following equation, Zmr is the number of meshing teeth of the driving pulley.

$$K_{mr} = 1.58 \times \left[1 - exp\left(-\frac{Z_{mr}}{14.8}\right)\right] \qquad \text{EQUATION（1 5）}$$

(Determination of Belt Correction factor Kb)

Next, determination of the belt correction factor Kb will be described. The belt correction factor Kb is a factor for correcting an influence on the jumping torque due to the hardness of the tooth portion of the toothed belt and the difference in the friction factor between the toothed belt and a toothed pulley. That is, when the hardness of the tooth portion is high, deformation of the tooth is prevented and the tooth portion of the toothed belt is prevented from riding on the tooth portion of the pulley, which is thought to increase the jumping torque.
In addition, when the friction factor is small, the tooth portion of the toothed belt easily slides down an inclined surface of the groove portion of the pulley, and therefore the tooth portion of the toothed belt is prevented from riding on the tooth portion of the pulley, which is thought to increase the jumping torque. In this way, the belt correction factor Kb is experimentally obtained based on estimation that the belt correction factor Kb is a factor determined by the hardness of the tooth portion of the toothed belt and the friction factor between the toothed belt and the toothed pulley. A test was performed under the following two conditions.

(Test Condition A)

As a test layout under a test condition A, the layouts 2 to 4 were used, which are the same as the layouts when the teeth in mesh correction factor Kmn of the driven pulley and the overall correction factor K were obtained. As a test belt (a toothed belt), a belt obtained by reducing the friction factor ($\mu$) to 0.26 by applying silicon to a surface of the tooth portion of the same belt as described above, that is, the "SUPER TORQUE G" (the tooth profile: S8M, the tooth pitch: 8 mm, the tooth height (h): 3.05 mm, the hardness Hs of the tooth portion: 75 degrees) manufactured by Mitsuboshi Belting Ltd. was used. The belt is referred to as the belt having the low friction specification. Initial tensions in a case of the layout 2 were set to three conditions of 125 N, 250 N, and 500 N, and an initial tension in cases of the layouts 3 and 4 was set to one condition of 125 N. The rotational speed of the driving pulley was 500 rpm. The test conditions are summarized in Table 3.

Table 3

| Test Example | Layout No. | Rotation direction | Belt width W (mm) | Belt length (mm) | ES value (N) | Line density m (kg/m) | Initial tension T$_0$ (N) |
|---|---|---|---|---|---|---|---|
| 9 | 2 | CW | 15 | 928 | 273000 | 0.078 | 125, 250, 500 |
| 10 | 3 | CW | 15 | 960 | 273000 | 0.078 | 125 |
| 11 | 3 | CCW | 15 | 960 | 273000 | 0.078 | 125 |
| 12 | 4 | CW | 15 | 1136 | 273000 | 0.078 | 125 |
| 13 | 4 | CCW | 15 | 1136 | 273000 | 0.078 | 125 |

(Test Condition B)

A test layout under a test condition B was a simple 2-shaft layout similar to the layout 2 described above, but the number of pulley teeth of each of the driving pulley and the driven pulley was 22. As a test belt (a toothed belt), a "GIGA torque GX" (a tooth profile: G8M, a tooth pitch: 8 mm, a tooth height (h): 3.50 mm, a hardness (Hs) of a tooth portion: 98 degrees, and a friction factor ($\mu$): 0.24) manufactured by Mitsuboshi Belting Ltd. was used. The belt is referred to as the belt having the high stiffness specification. The test conditions are summarized in Table 4.

Table 4

| Test Example | Belt width W (mm) | Belt length (mm) | ES value (N) | Initial tension T$_0$ (N) |
|---|---|---|---|---|
| 14 | 12 | 1000 | 512000 | 200, 400 |
| 15 | 12 | 1120 | 512000 | 200, 400 |
| 16 | 12 | 1792 | 512000 | 400, 830 |

(Test Results)

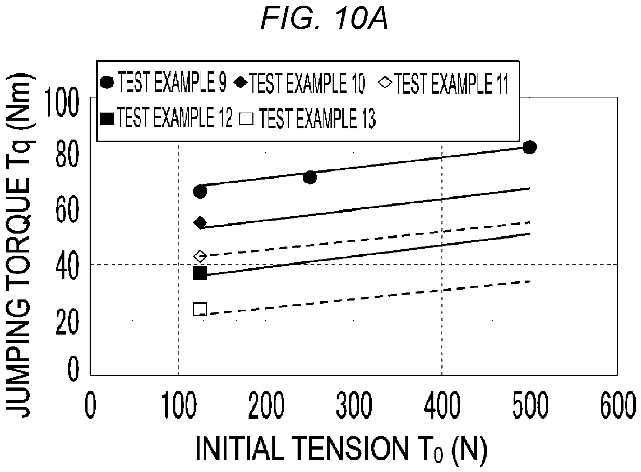

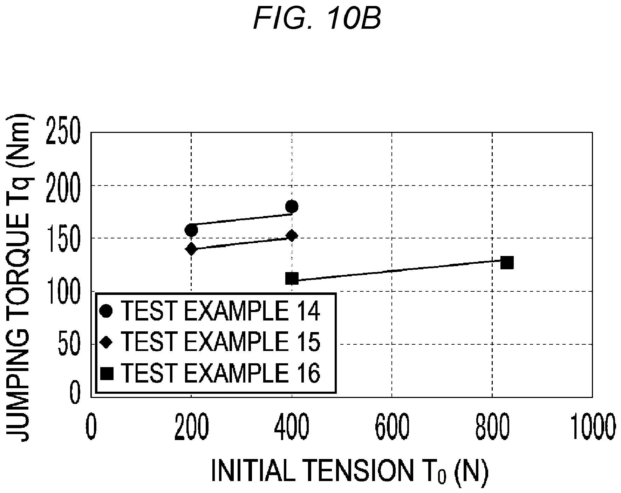

FIG. 10A shows results of Test Examples 9 to 13, and FIG. 10B shows results of Test Examples 14 to 16. In FIGS. 10A and 10B, circle plots, rhombus plots, and square plots represent actual measurement values of the jumping torque, and solid lines and broken lines represent calculated values of the jumping torque according to Equation (4).

When FIG. 10A is compared with FIG. 8B, it can be confirmed that the jumping torque is larger in the belt having the low friction specification than in the standard specification belt.

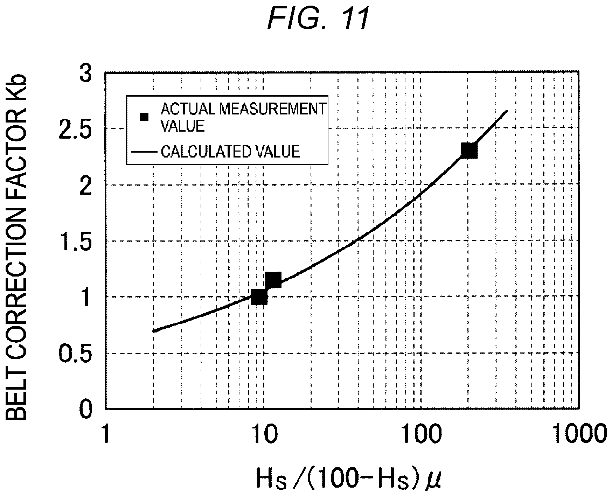

Next, determination of the belt correction factor Kb will be described. In Equation (4), since it is considered that the influence of the centrifugal tension can be ignored in the present experiment, Kc = 0, and K and Kmn were calculated by Equations (13) and (14) described above. In the same manner as when K and Kmn were obtained, an appropriate initial value was input to Kb to calculate the jumping torque, and a value of Kb was obtained such that the calculated value and the actual measurement value overall matched. The obtained belt correction factor Kb is expressed by the following Equation (16). Table 5 summarizes the hardness Hs of the tooth portion of the toothed belt, the friction factor $\mu$ between the toothed belt and the toothed pulley, and the belt correction factor Kb in each belt specification of the toothed belt. Further, FIG. 11 is a graph showing a correlation between a value of (Hs/(100 - Hs) · $\mu$) and the belt correction factor Kb when values in Table 5 are substituted into Equation (16).

$$K_b = 0.58 \left[ \frac{H_s}{(100 - H_s)\mu} \right]^{0.259} \qquad \text{EQUATION (16)}$$

Table 5

| Belt specification | Tooth hardness Hs (degrees) | Friction factor $\mu$ | Belt correction factor Kb |
|---|---|---|---|
| Standard specification | 75 | 0.32 | 1.00 |
| Low friction specification | 75 | 0.26 | 1.13 |

(continued)

| Belt specification | Tooth hardness Hs (degrees) | Friction factor $\mu$ | Belt correction factor Kb |
|---|---|---|---|
| High stiffness specification | 98 | 0.24 | 2.30 |

(Determination of Centrifugal Force Correction Factor Kc)

Next, determination of the centrifugal force correction factor Kc will be described. When the toothed belt rotates, a centrifugal force according to the mass and the traveling speed thereof is generated. Since the centrifugal force acts as a force with which the toothed belt rides on the tooth portions of the pulley, it is considered that the jumping torque decreases when a rotational speed of the pulley is high. In the tests so far, since the rotational speed of the driving pulley was as small as 500 rpm and the traveling speed of the toothed belt was also small, the influence of the centrifugal force on the jumping torque could be ignored, and Kc = 0. However, when the toothed belt is actually used, the toothed belt may be used at a higher speed. The prediction accuracy of the jumping torque can be further improved by performing correction of the centrifugal force.

(Test Conditions)

First, for the 2-shaft layout, a test was performed with the same test belt, layout, and test conditions as those of Test Example 4 except for the rotational speed of the driving pulley. The rotational speed of the driving pulley was set to four conditions of 500 rpm, 1000 rpm, 2000 rpm, and 3000 rpm. However, the rotational speed of the driving pulley at the initial tension of 250 N was set to two conditions of 500 rpm and 3000 rpm. Further, for the 3-shaft layout, a test was performed with the same test belt, layout, and test conditions as those of Test Example 7 and Test Example 8 except for the rotational speed of the driving pulley. The rotational speed of the driving pulley was set to two conditions of 500 rpm and 3000 rpm. The test conditions are summarized in Table 6.

Table 6

| Test Example | Layout No. | Rotation direction | Belt width W (mm) | Belt length (mm) | ES value (N) | Initial tension $T_0$ (N) | Driving pulley rotational speed (rpm) |
|---|---|---|---|---|---|---|---|
| 17 | 2 | CW | 15 | 928 | 273000 | 125 | 500, 1000, 2000, 3000 |
| 18 | 2 | CW | 15 | 928 | 273000 | 250 | 500,3000 |
| 19 | 2 | CW | 15 | 928 | 273000 | 500 | 500, 1000, 2000, 3000 |
| 20 | 4 | CW | 15 | 1136 | 273000 | 125 | 500,3000 |
| 21 | 4 | CW | 15 | 1136 | 273000 | 250 | 500,3000 |
| 22 | 4 | CW | 15 | 1136 | 273000 | 500 | 500,3000 |
| 23 | 4 | CCW | 15 | 1136 | 273000 | 125 | 500,3000 |
| 24 | 4 | CCW | 15 | 1136 | 273000 | 250 | 500,3000 |
| 25 | 4 | CCW | 15 | 1136 | 273000 | 500 | 500,3000 |

(Test Results)

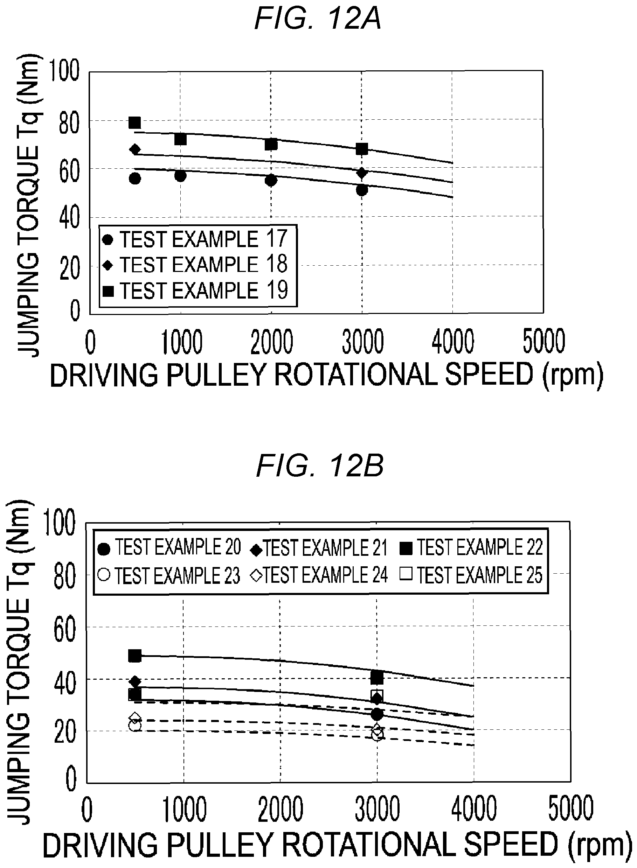

FIG. 12A shows results of Test Examples 17 to 19, and FIG. 12B shows results of Test Examples 20 to 25. In FIGS. 12A and 12B, circle plots, rhombus plots, and square plots represent actual measurement values of the jumping torque, and solid lines and broken lines represent calculated values of the jumping torque according to Equation (4).

From FIGS. 12A and 12B, the jumping torque decreases substantially along a quadratic curve as the rotational speed increases, and the validity of Equation (4) can be confirmed.

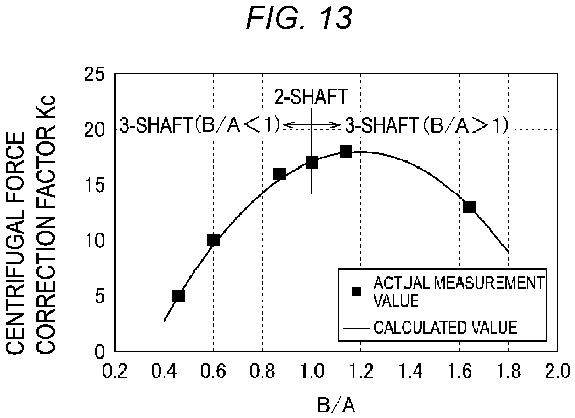

The method of determining the centrifugal force correction factor Kc is the same as the method of determining the belt correction factor Kb. That is, in Equation (4), the jumping torque was calculated by using values of K, Kmn, and Kb calculated from Equations (13), (14), and (16) and by inputting an appropriate initial value to Kc, and a value of Kc was obtained such that the calculated value and the actual measurement value overall matched. The obtained centrifugal force correction factor Kc is expressed by the following Equation (17). FIG. 13 shows a graph showing a correlation between B/A and the centrifugal force correction factor Kc in Equation (17).

$$K_c = -24.4 \left(\frac{B}{A}\right)^2 + 58.1 \left(\frac{B}{A}\right) - 16.4 \qquad \text{EQUATION (17)}$$

Although the methods of determining the correction factors have been described above, these correction factors may vary depending on conditions such as the belt specifications and the tooth profile (in particular, the tooth pitch). Therefore, the present invention is not limited to the forms of the equations of the correction factors or the values of the factors described in the present embodiment.

(Verification 1 of Prediction Accuracy)

Consistency between the jumping torque actually measured by the present inventors and the jumping torque calculated value calculated by Equation (4) was verified, including the test conditions shown in the above test examples.

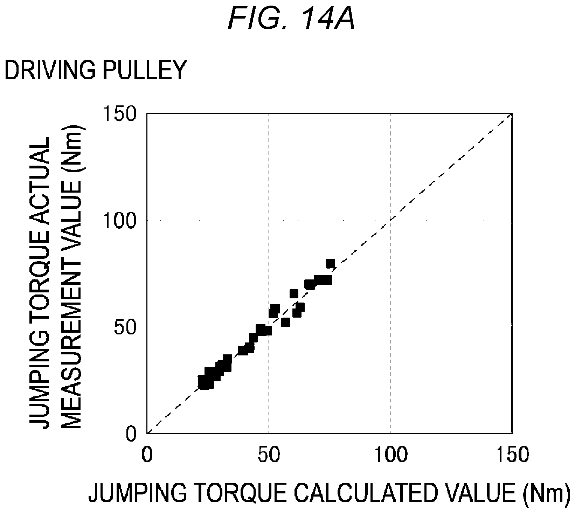

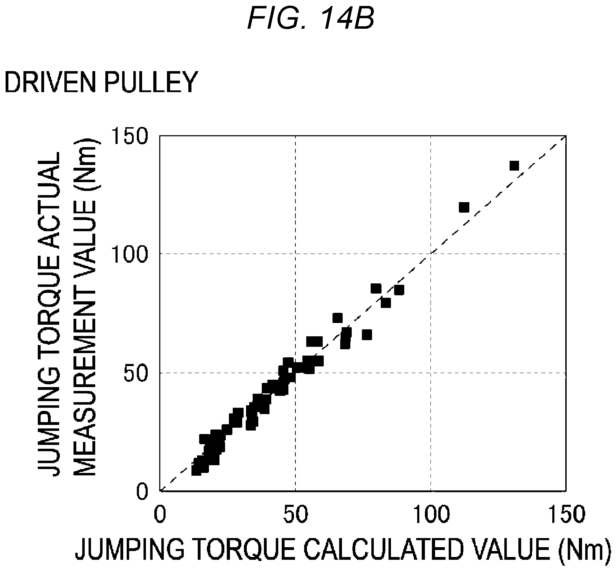

FIG. 14A summarizes a condition under which the jumping occurs in the driving pulley, and FIG. 14B summarizes a condition under which the jumping occurs in the driven pulley.

FIG. 14A includes 37 conditions, an average value of an error was 5.3%, a maximum value of the error was 12.4%, and a standard deviation was 2.7 Nm. FIG. 14B includes 56 conditions, an average value of an error was 10.2%, a maximum value of the error was 39.5%, and a standard deviation was 4.2 Nm. From the results described above, it is considered that the calculation formulas according to the present application have a relatively high prediction accuracy.

(Verification 2 of Prediction Accuracy)

In the test examples described above, the tooth profile of the test belt (the toothed belt) was S8M tooth profile, but verification was also performed on an S3M tooth profile having a smaller pitch. Test conditions and test results of the belt correction factor Kb when the tooth profile of the test belt (the toothed belt) was the S3M tooth profile were shown below to verify the prediction accuracy.

(Test Conditions)

Test belt (toothed belt) and pulley tooth profile: S3M
Layout: 2-shaft layout (layout 2) and 3-shaft layout (layout 1)
The number of pulley teeth: the number of pulley teeth was selected from three types of pulleys having the numbers of teeth of 24, 48, and 72, and used in combination.
Initial tension $T_0$: three levels of 25 N, 51 N, and 101 N
Belt width: 10 mm
Belt length: 600 mm
Belt specification: three types of standard specification, high strength specification, and high elastic modulus specification (see Table 7)

(Belt Specification)

Table 7

| Belt specification | Product name | Tooth pitch | Tooth height (h) | ES value (N) | Line density m (kg/m) |
|---|---|---|---|---|---|
| Standard specification | SUPER TORQUE G manufactured by Mitsuboshi Belting Ltd. | 3 mm | 1.14 mm | 47000 | 0.019 |

(continued)

| Belt specification | Product name | Tooth pitch | Tooth height (h) | ES value (N) | Line density m (kg/m) |
|---|---|---|---|---|---|
| High strength specification | MEGA TORQUE G manufactured by Mitsuboshi Belting Ltd. | 3 mm | 1.14 mm | 84000 | 0.022 |
| High elastic modulus specification | MEGA TORQUE EX manufactured by Mitsuboshi Belting Ltd. | 3mm | 1.14 mm | 185000 | 0.020 |

(Test Results)

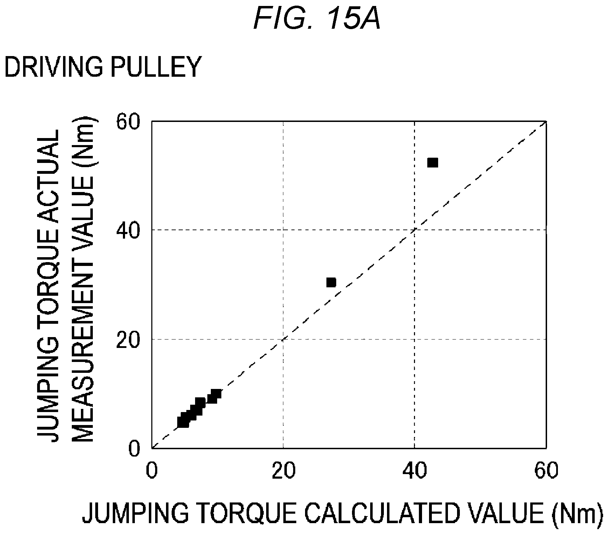

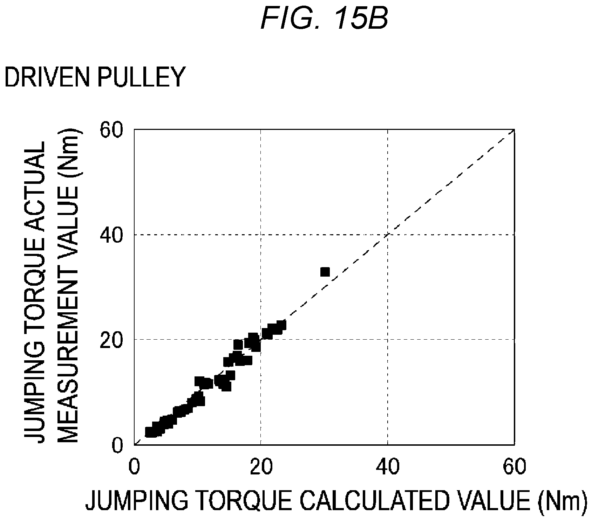

Even when the tooth profile of the test belt (the toothed belt) was the S3M tooth profile, as in the case of the S8M tooth profile, an appropriate initial value was input to Kb to calculate the jumping torque, and values of Kb were obtained such that the calculated values and the actual measurement values overall matched. Values of Kb in the respective belt specifications of the S3M tooth profile are shown in Table 8. Further, the actual measurement values and the calculated values of the jumping torque were summarized in a graph as shown in FIG. 15. Even in a case of the S3M tooth profile, it can be confirmed that the actual measurement values and the calculated values well match, and it is considered that a calculation control method according to the present application can accurately calculate the jumping torque even the tooth profiles are different from each other.

Table 8

| Belt specification | Belt correction factor Kb |
|---|---|
| Standard specification | 1.55 |
| High strength specification | 1.26 |
| High elastic modulus specification | 0.84 |

(Calculation Processing of Predicted Value of Jumping Torque Tq)

Next, calculation processing of the predicted value of the jumping torque Tq using the information processing apparatus 10 will be described.

First, the user inputs, by the input unit 13 of the information processing apparatus 10, the values of the various parameters of the equivalent longitudinal elastic modulus E of the toothed belt 1 in the belt longitudinal direction, the cross-sectional area S of the toothed belt 1, a value (ES) obtained by multiplying the longitudinal elastic modulus E and the cross-sectional area S, the tooth height h of the toothed belt 1, the radius Rr of the driving pulley DR (the pulley pitch diameter of the driving pulley DR), and the radius Rn of the driven pulley DN (the pulley pitch diameter of the driven pulley DN), the values of various parameters of the initial tension $T_0$, the tight-side span length Lt, the slack-side span length Ls, the winding angle $\theta r$ (rad), and the winding angle $\theta n$ (rad) when the toothed belt 1 is wound around the driving pulley DR and the driven pulley DN, the teeth in mesh correction factor Kmn of the driven pulley and the overall correction factor K, and the values of various parameters of the centrifugal tension Tc, the line density m of the toothed belt 1, the traveling speed V of the toothed belt 1, the centrifugal force correction factor Kc, the belt correction factor Kb, and the teeth in mesh correction factor Kmr of the driving pulley, and stores the values into the information table of the storage unit 12 (step 1a and step 1e).

Next, the user can select a mode A in which the predicted value of the jumping torque Tq is calculated by using Simple Correction Equation (1) or the like, a mode B in which the predicted value of the jumping torque Tq is calculated by using the Final Correction Equation (4) or the like, and a mode C in which the predicted value of the jumping torque Tq is calculated in consideration of a case where the jumping occurs in the driving pulley by using Equations (6) and (7) or the like. Since the values of the various parameters obtained in the modes A to C are different from each other, only the values of the various parameters necessary for convenience may be stored in the storage unit 12 by using the input unit 13 in the step 1a.

(Mode A: Using Simple Correction Equation (1))

The control unit 11 of the information processing apparatus 10 reads Equations (1) to (3) from the program and reads the values of the various parameters necessary for Equations (1) to (3) stored in the information table of the storage unit 12 to calculate the predicted value of the jumping torque Tq (step 1b).

Then, the control unit 11 causes the display unit 14 to display the calculated predicted value of the jumping torque Tq (step 1c).

According to the method, it is possible to calculate the predicted value of the jumping torque Tq which is relatively close to the actual measurement value except when the toothed belt 1 has a special specification and when a traveling speed of the toothed belt 1 is high.

(Mode B: Using Final Correction Equation (4))

The control unit 11 of the information processing apparatus 10 reads Equations (2) to (5) from the program and reads the values of the various parameters necessary for Equations (2) to (5) stored in the information table of the storage unit 12 to calculate the predicted value of the jumping torque Tq (step 1b).

Then, the control unit 11 causes the display unit 14 to display the calculated predicted value of the jumping torque Tq (step 1c).

In the method, the predicted value of the jumping torque Tq can be calculated in consideration of the centrifugal force correction factor Kc for the correction based on the centrifugal force according to the mass and the traveling speed V of the toothed belt 1 that travels in the layout including the driving pulley DR and the driven pulley DN and the belt correction factor Kb for correcting the hardness of the tooth portion 2 of the toothed belt 1 and the difference in the friction factor. Therefore, even when the toothed belt 1 has a special specification and the traveling speed V of the toothed belt 1 is high, an accuracy of the predicted value of the jumping torque Tq can be improved.

(Mode C: Using Equations (6) and (7))

The control unit 11 of the information processing apparatus 10 reads Equations (2) to (5) from the program, and calculates the effective tension Ten, which is the difference between the tight-side tension and the slack-side tension of the driven pulley DN, obtained from Equation (6) indicating the correlation between the predicted value Tqn of the jumping torque Tq in the driven pulley DN calculated by reading the values of the various parameters necessary for Equations (2) to (5) stored in the information table of the storage unit 12 and the effective tension Ten (step 1d).

The effective tension Ter, which is the difference between the tight-side tension and the slack-side tension of the driving pulley DR, is calculated obtained from Equation (7) indicating the correlation between the predicted value Tqr of the jumping torque Tq in the driving pulley DR calculated by substituting the value of the teeth in mesh correction factor Kmr of the driving pulley stored in the step 1e into Equation (7), and the effective tension Ter (step 1f).

Next, the control unit 11 compares magnitudes of the effective tension Ten and the effective tension Ter, which are calculated, and determines the predicted value Tqn as the predicted value of the jumping torque Tq in the entire layout when Ten ≤ Ter and determines the predicted value Tqr as the predicted value of the jumping torque Tq in the entire layout when Ten > Ter (step 1g).

Then, the control unit 11 causes the display unit 14 to display the predicted value of the jumping torque Tq determined in the step 1g (step 1h).

According to the method, as described above, the jumping torque Tqn in the driven pulley DN and the jumping torque Tqr in the driving pulley DR are calculated, a jumping torque having a lower effective tension is adopted as the jumping torque Tq in the entire layout, and the prediction accuracy can be further increased.

(Other Embodiments)

The processing of calculating the jumping torque Tq executed in the embodiment may be executed by being installed as software (programs, data) in an information processing apparatus exemplified by a portable information device such as a smartphone, a portable computer, a laptop computer, a notebook computer, a tablet personal computer, a hand held personal computer, and a personal data assistant (PDA). In this case, the software may be downloaded from a server or the like by a communication method and stored in a storage device (a flash memory or the like) in the portable information device. The communication method may be a transmission line capable of two-way communication, such as the Internet or a cable television, or may be broadcasting that transmits information only in one direction.

The software for executing the processing of calculating the jumping torque Tq may be stored in a storage medium such as a CD-ROM, a DVD-ROM, a magneto-optical disk (MO), a hard disk, or a flash memory, read from the storage medium as necessary, and installed in the storage unit 12 of the information processing apparatus 10.

Contents described in the embodiment may be implemented as a service executed between an information terminal (an input of various parameters) such as a smartphone or a PC and the information processing apparatus 10 (the calculation of the jumping torque Tq) via the Internet (a communication line).

The processing executed in the embodiment may be a program installed in a smartphone or a PC. The program may be stored in a storage medium (MEDIUM).

The processing executed in the embodiment may be implemented by a calculation control device of the jumping torque Tq with the information processing apparatus 10.

Although the embodiment according to the present invention has been described above, the specific examples are merely shown, and the present invention is not particularly limited. A specific configuration of each unit can be changed in design as appropriate. In addition, effects described in the embodiment according to the present invention are merely examples of the most preferable effects generated from the present invention, and the effects according to the present invention are not limited to those described in the embodiment of the present invention.

The present application is based on Japanese Patent Application No. 2021-109639 filed on June 30, 2021 and Japanese Patent Application No. 2022-097983 filed on June 17, 2022, and the content thereof is incorporated herein by reference.

REFERENCE SIGNS LIST

1: toothed belt
2: tooth portion
10: information processing apparatus
11: control unit
12: storage unit
13: input unit
14: display unit
DR: driving pulley
DN: driven pulley
Tq: jumping torque

## Claims

1. A calculation control method for a predicted value of a jumping torque Tq of a toothed belt configured to be wound around a layout comprising a driving pulley and a driven pulley, the calculation control method comprising:

   (1a) causing, by a control device, a storage device to store
   values of parameters of a correlation value ES between a force and a strain in a tensile test of the toothed belt, a tooth height h, a pulley pitch diameter Rr of the driving pulley, and a pulley pitch diameter Rn of the driven pulley, the correlation value ES being obtained by multiplying an equivalent longitudinal elastic modulus E in a belt longitudinal direction and a cross-sectional area S of the toothed belt,
   values of parameters of an initial tension $T_0$, a tight-side span length Lt, a slack-side span length Ls, a winding angle θr of the toothed belt on the driving pulley, and a winding angle θn of the toothed belt on the driven pulley, when the toothed belt is wound around the driving pulley and the driven pulley, and
   a value of a teeth in mesh correction factor Kmn of the driven pulley and a value of an overall correction factor K;
   (1b) substituting, by the control device, the values of the parameters, the value of the overall correction factor K, and the value of the teeth in mesh correction factor Kmn stored in (1a) into Equations (1) to (3):

$$T_q = K \left[ \frac{A + B}{A} T_0 + K_{mn} \frac{ES \cdot h\theta_n}{A} \right] R_n \qquad \text{EQUATION (1)}$$

$$A = L_t + \frac{R_r \theta_r + R_n \theta_n}{2} \qquad \text{EQUATION (2)}$$

$$B = L_s + \frac{R_r\theta_r + R_n\theta_n}{2} \qquad \text{EQUATION (3)}$$

to calculate the predicted value of the jumping torque Tq; and

(1c) outputting, by the control device, the predicted value of the jumping torque Tq calculated in (1b), wherein the value of the teeth in mesh correction factor Kmn of the driven pulley and the value of the overall correction factor K are values determined in advance at which an average value of a difference obtained by comparing a calculated value of the jumping torque Tq when the values of the parameters are substituted into Equations (1) to (3) and an actual measurement value of the jumping torque Tq is minimized.

2. A calculation control method for a predicted value of a jumping torque Tq of a toothed belt configured to be wound around a layout comprising a driving pulley and a driven pulley, the calculation control method comprising:

(2a) causing, by a control device, a storage device to store

values of parameters of a correlation value ES between a force and a strain in a tensile test of the toothed belt, a tooth height h, a pulley pitch diameter Rr of the driving pulley, and a pulley pitch diameter Rn of the driven pulley, the correlation value ES being obtained by multiplying an equivalent longitudinal elastic modulus E in a belt longitudinal direction and a cross-sectional area S of the toothed belt,

values of parameters of an initial tension $T_0$, a tight-side span length Lt, a slack-side span length Ls, a winding angle θr of the toothed belt on the driving pulley, and a winding angle θn of the toothed belt on the driven pulley, when the toothed belt is wound around the driving pulley and the driven pulley,

values of parameters of a centrifugal tension Tc that is a tension generated by a centrifugal force of the toothed belt and is calculated based on the layout, a line density m of the toothed belt, a traveling speed V of the toothed belt, a centrifugal force correction factor Kc for correction based on the centrifugal force according to a mass and the traveling speed of the toothed belt that travels in the layout, and a belt correction factor Kb for correcting a hardness of a tooth of the toothed belt and a difference in a friction factor, and

a value of a teeth in mesh correction factor Kmn of the driven pulley and a value of an overall correction factor K;

(2b) substituting, by the control device, the values of the parameters, the value of the overall correction factor K, and the value of the teeth in mesh correction factor Kmn stored in (2a) into Equations (2) to (5):

$$A = L_t + \frac{R_r\theta_r + R_n\theta_n}{2} \qquad \text{EQUATION (2)}$$

$$B = L_s + \frac{R_r\theta_r + R_n\theta_n}{2} \qquad \text{EQUATION (3)}$$

$$T_q = K\left[\frac{A+B}{A}\left(T_0 - K_c \cdot T_c\right) + K_b K_{mn}\frac{ES \cdot h\theta_n}{A}\right]R_n \qquad \text{EQUATION (4)}$$

$$T_c = mV^2 \qquad \text{EQUATION (5)}$$

to calculate the predicted value of the jumping torque Tq; and

(2c) outputting, by the control device, the predicted value of the jumping torque Tq calculated in (2b), wherein the value of the teeth in mesh correction factor Kmn of the driven pulley and the value of the overall correction factor K are values determined in advance at which an average value of a difference obtained by comparing a calculated value of the jumping torque Tq when the values of the parameters are substituted into Equations (1) to (3):

$$T_q = K \left[ \frac{A+B}{A} T_0 + K_{mn} \frac{ES \cdot h\theta_n}{A} \right] R_n$$

EQUATION（1）

$$A = L_t + \frac{R_r\theta_r + R_n\theta_n}{2}$$

EQUATION（2）

$$B = L_s + \frac{R_r\theta_r + R_n\theta_n}{2}$$

EQUATION（3）

and an actual measurement value of the jumping torque Tq is minimized.

3. The calculation control method for a predicted value of a jumping torque Tq according to claim 2, further comprising:

(2d) calculating an effective tension Ten that is a difference between a tight-side tension and a slack-side tension of the driven pulley and is determined from Equation (6):

$$T_{qn} = K \left[ \frac{A+B}{A} (T_0 - K_c \cdot T_c) + K_b K_{mn} \frac{ES \cdot h\theta_n}{A} \right] R_n = T_{en} R_n$$

EQUATION（6）

indicating a correlation between a predicted value Tqn of the jumping torque Tq in the driven pulley calculated in (2b) and the effective tension Ten;
(2e) further causing the storage device to store a teeth in mesh correction factor Kmr of the driving pulley determined in advance by a method similar to a method for determining the value of the teeth in mesh correction factor Kmn of the driven pulley;
(2f) further calculating an effective tension Ter that is a difference between a tight-side tension and a slack-side tension of the driving pulley and is determined from Equation (7):

$$T_{qr} = K \left[ \frac{A+B}{A} (T_0 - K_c \cdot T_c) + K_b K_{mr} \frac{ES \cdot h\theta_r}{A} \right] R_r = T_{er} R_r$$

EQUATION（7）

indicating a correlation between a predicted value Tqr of the jumping torque Tq in the driving pulley calculated by substituting the value of the teeth in mesh correction factor Kmr stored in (2e) into Equation (7) and the effective tension Ter;
(2g) comparing magnitudes of the effective tension Ten and the effective tension Ter, and determining the predicted value Tqn as the predicted value of the jumping torque Tq in the entire layout when Ten ≤ Ter and determining the predicted value Tqr as the predicted value of the jumping torque Tq in the entire layout when Ten > Ter; and
(2h) in (2c), outputting the predicted value of the jumping torque Tq determined in (2g).

# FIG. 1

## FIG. 2

## FIG. 3

## FIG. 4

## FIG. 5

## FIG. 6

10

INFORMATION PROCESSING APPARATUS

| INPUT UNIT13 | CONTROL UNIT 11 | STORAGE UNIT12 |

DISPLAY UNIT14

*FIG. 7A*

LAYOUT 1

*FIG. 7B*

LAYOUT 2

FIG. 7C

LAYOUT 3

FIG. 7D

LAYOUT 4

## FIG. 8A

## FIG. 8B

## FIG. 9A

## FIG. 9B

## FIG. 10A

# FIG. 10B

## FIG. 11

## FIG. 12A

## FIG. 12B

## FIG. 13

## FIG. 14A

DRIVING PULLEY

## FIG. 14B

DRIVEN PULLEY

## FIG. 15A

DRIVING PULLEY

## FIG. 15B

DRIVEN PULLEY

## INTERNATIONAL SEARCH REPORT

| International application No. |
| --- |
| **PCT/JP2022/025971** |

| A. | CLASSIFICATION OF SUBJECT MATTER |
| --- | --- |

*F16H 7/02*(2006.01)i
FI: F16H7/02 A

According to International Patent Classification (IPC) or to both national classification and IPC

| B. | FIELDS SEARCHED |
| --- | --- |

Minimum documentation searched (classification system followed by classification symbols)

F16H7/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-143784 A (MITSUBOSHI BELTING LTD) 10 September 2020 (2020-09-10) | 1-3 |
| A | JP 2002-139109 A (MITSUBOSHI BELTING LTD) 17 May 2002 (2002-05-17) | 1-3 |
| A | JP 2002-364709 A (GATES UNITTA ASIA CO) 18 December 2002 (2002-12-18) | 1-3 |
| A | JP 2-159535 A (BANDO CHEMICAL IND) 19 June 1990 (1990-06-19) | 1-3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 September 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/025971**

| Patent document cited in search report | | | Publication date (day/month/year) | Patent family member(s) | Publication date (day/month/year) |
|---|---|---|---|---|---|
| JP | 2020-143784 | A | 10 September 2020 | (Family: none) | |
| JP | 2002-139109 | A | 17 May 2002 | (Family: none) | |
| JP | 2002-364709 | A | 18 December 2002 | (Family: none) | |
| JP | 2-159535 | A | 19 June 1990 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021109639 A

- JP 2022097983 A

**Non-patent literature cited in the description**

- **KOYAMA, T ; ZHANG, W ; NISHIGUCHI, A ; KAGOTANI, M.** 123 A Study on Jumping of synchronous Belt Drives (Mechanisms of Jumping). *Proceedings of The Machine Design and Tribology Division 2nd Meeting in The Japan Society of Mechanical Engineers,* 2002, vol. 2 (02-12), 107-110